Europäisches Patentamt

European Patent Office

Office européen des brevets

(11) Publication number: **0 051 349**
**B1**

(12) **EUROPEAN PATENT SPECIFICATION**

(45) Date of publication of patent specification: **10.09.86**

(51) Int. Cl.⁴: **H 01 M 10/12, H 01 M 4/14**

(21) Application number: **81303302.4**

(22) Date of filing: **17.07.81**

(54) A lead - acid battery construction.

(30) Priority: **04.08.80 SE 8005528**

(43) Date of publication of application:
**12.05.82 Bulletin 82/19**

(45) Publication of the grant of the patent:
**10.09.86 Bulletin 86/37**

(84) Designated Contracting States:
**AT BE CH DE FR GB IT LI NL SE**

(56) References cited:
**FR-A- 328 250**
**FR-A- 516 163**
**FR-A-2 203 178**
**FR-A-2 391 567**
**GB-A-1 144 438**
**US-A-2 883 443**
**US-A-3 447 969**
**US-A-3 536 531**
**US-A-4 121 019**

(73) Proprietor: **KOEHLER MANUFACTURING COMPANY**
**123 Felton Street**
**Marlborough, Massachusetts 07152 (US)**

(72) Inventor: **Sundberg, Eric**
**Nicandergats 5**
**Helsingborg (SE)**

(74) Representative: **Haggart, John Pawson et al**
**Page, White & Farrer 5 Plough Place New Fetter Lane**
**London EC4A 1HY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a lead-acid battery construction of the kind comprising positive and negative foil electrodes separated by a porous separator which contains an electrolyte.

Conventional lead-acid battery electrodes employ a grid structure which may consist of a lead top bar, a terminal and depending spines, or a lead frame including a terminal, or expanded or perforated lead sheet including a terminal.

There is a need for increased power-to-weight and power-to-volume ratios. Of even greater importance is the need for a lead-acid battery construction which is substantially maintenance-free and is capable of repeated deep cycling over extended periods of time. In addition, the manufacture of lead-acid batteries of the grid type may involve environmental and health hazards due to the release of lead particles.

US—A—2 883 443 discloses a high power output storage battery whose positive and negative electrodes are made from thin lead foils with intervening separators. GB—A—1 144 438 also discloses a storage battery with foil electrodes separated by a micro-porous diaphragm.

It is a main object of the present invention to provide an improved battery of this kind which has a greatly increased power-to-weight and power-to-volume ratio and which is capable of faster discharging and recharging and of deep cycling over long time periods.

According to the invention there is provided a lead-acid battery construction of the kind comprising positive and negative foil electrodes which are separated by a porous separator, characterised in that the negative electrode comprises sponge lead in contact with the separator and non-porous lead which acts as current carrier, and the positive electrode comprises $\beta$-$PbO_2$ in contact with the separator and $\alpha$-$PbO_2$ in sufficient amount to carry the required current in any portion of the charge/discharge cycle.

The proportion of sponge lead of the negative electrodes defines and controls the proportion of $\alpha$-$PbO_2$ which is maintained as current carrier of the positive electrodes.

Some embodiments of the invention will now be described, by way of example, with reference to the accompanying drawings in which:—

Figure 1 is a cross-section through a test cell illustrating in detail foil electrodes and a separator,

Figure 2 is a perspective view illustrating the foil electrodes and separator of Figure 1,

Figure 3 is a perspective view, showing in further detail the form of a foil electrode of the cell of Figures 1 and 2,

Figure 4 is a fragmentary cross-sectional view showing in greater detail a part of the test cell of Figure 1,

Figure 5 is a diagrammatic view of the test cell connected to an operating load and illustrating chemical changes taking place during battery discharge, and $\alpha$-$PbO_2$ maintained as current carrying means in a positive electrode,

Figure 6 is a diagrammatic view illustrating chemical changes in the cell during recharge, and also indicating diagrammatically $\alpha$-$PbO_2$ maintained as current carrying means,

Figure 7 is a diagrammatic view of the cell illustrating chemical changes in the electrodes during a first phase of formation,

Figure 8 is a view of the cell of Figure 7 showing chemical changes taking place during a second phase of formation,

Figure 9 is a view similar to Figures 7 and 8 showing chemical changes taking place during a third and final phase of formation,

Figure 10 is a view similar to Figures 7 to 9 showing chemical changes which occur in a positive electrode during an extended period of recharging,

Figure 11 is a perspective view, partially broken away, of one embodiment of a 4-volt battery of the invention for miner's cap lamp operation,

Figure 12 is a fragmentary cross-sectional view of an upper portion of a battery of a construction similar to that of Figure 11, and illustrating electrodes interconnected,

Figure 13 is a perspective view, partially broken away, of a bottom portion of the battery of Figure 11 also showing means for interconnecting the cells,

Figure 14 is a fragmentary view of a modification of the foil construction of Figure 3,

Figure 15 is a cross-sectional view of a battery of the invention which includes composite electrodes,

Figure 16 is a perspective view of a modified form of 4-volt miner's cap lamp battery having a "jelly-roll" electrode and separator arrangement,

Figure 17 is a cross-sectional view of one cell of the battery of Figure 16,

Figure 18 is a perspective view showing a "jelly-roll" construction using electrodes similar to that shown in Figure 3 and a separator partially unrolled,

Figure 19 is a view similar to Figure 18 but showing a construction employing composite electrodes of the type shown in Figure 15,

Figure 20 is a cross-sectional view through another cell showing the use of the composite electrode structure of Figure 19,

Figure 21 is a view similar to that of Figure 18 but showing the use of a composite electrode of the type shown in Figure 15, and

Figure 22 is a cross-sectional view of a single cell using the composite electrode structure of Figure 21.

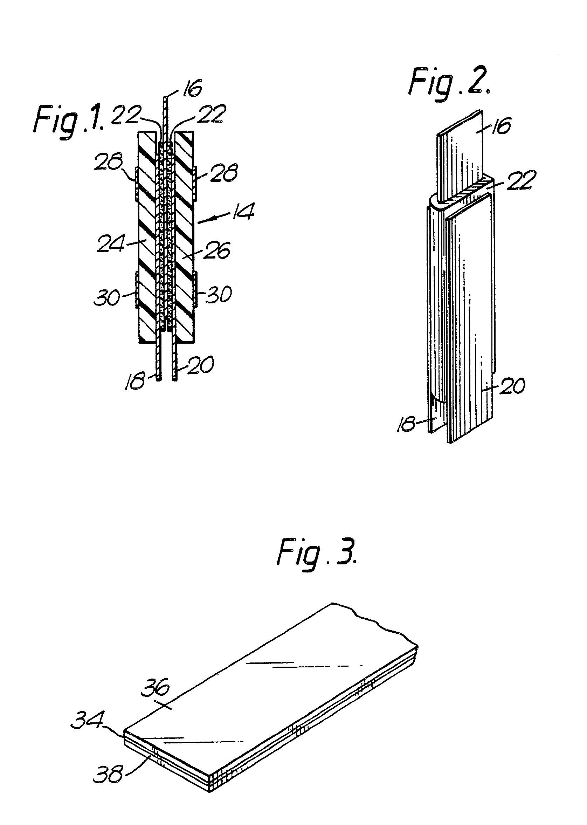

Figures 1 and 2 illustrate a single battery cell according to the invention. The positive electrode of the cell is a thin foil element 16 and the negative electrodes are thin foil bodies 18 and 20.

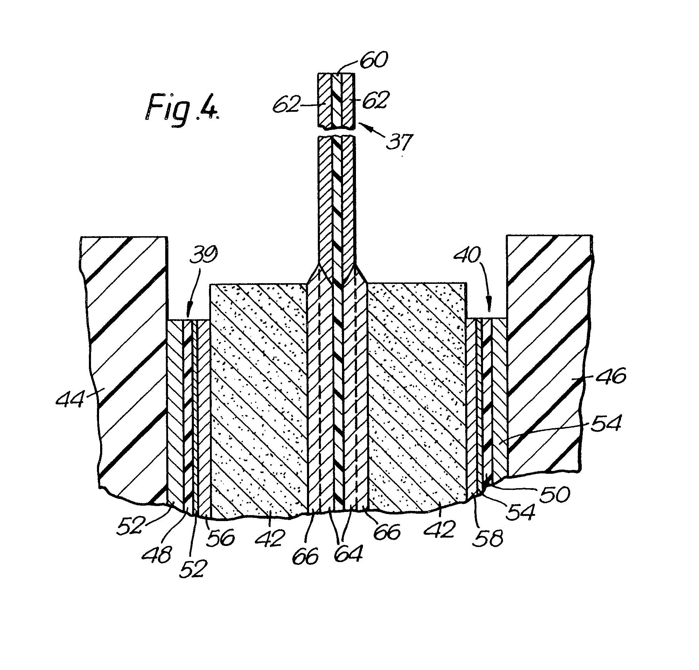

Located between the electrodes in abutting relationship therewith is a separator 22, most clearly shown in Figure 4. The separator is of a foraminous material which is substantially chemically inert in a sulfuric acid environment, for example glass wool or needle punched polyester.

The separator 22 is around the positive electrode 16 which projects upwardly beyond the upper end of separator 22 and the negative electrodes 18 and 20. The lower end of the separator 22 extends beyond the lower end of the positive electrode 16, and the lower ends of negative electrodes 18 and 20 project considerably beyond the lower end of the separator 22. With this arrangement adjacent foil surfaces are always isolated from one another by some portion of separator 22.

The foils of Figures 1 and 2 may be combined with substrates to form laminated bodies as illustrated in Figure 3, which shows a laminated body comprising a thin substrate 34 of a plastics material which is substantially chemically inert in a sulfuric acid environment and which is located between layers 36 and 38 of lead. The substrate 34 may be of polyester of polypropylene for example, and the outer lead layers may be applied to the substrate by a process such as vacuum deposition or rolling or electrodeless plating, or by an adhesive.

The assembly of electrodes 16, 18 and 20 and the separator 22, is held together with walls 24 and 26 by holding tapes 28 and 30.

In one embodiment of this test cell the separator 22 may be 0.4 mm thick and laminated foil electrodes are employed having outer lead layers 36 and 38 which are 25 µm thick on a substrate 34 which is 25 µm thick.

The cell body is immersed in a relatively low specific gravity sulfuric acid until the separator becomes partially saturated, e.g. 80% saturated.

The cell 14, is then subjected to a limited electrochemical Planté forming process which is controlled to provide negative electrodes having sponge lead and non-porous lead portions and a positive electrode having portions of $\beta$-$PbO_2$ and $\alpha$-$PbO_2$.

In Figure 4 the electrochemically formed electrodes of a cell are shown on an enlarged scale. This has a positive electrode 37, electrochemically formed negative electrodes 39 and 40 and a separator 42, which are assembled between walls 44 and 46. The negative electrodes include plastic substrates 48 and 50 and the electrochemical formation has been controlled so as to produce layers 56 and 58 of sponge lead, and to retain layers 52 and 54 of solid non-porous lead.

The positive electrode 37 includes a plastic substrate 60 and electrochemical formation has been controlled to produce outer layers of $PbO_2$ at either side of the substrate. The layers $PbO_2$ comprise both $\beta$-$PbO_2$ portions 66 which take part in the charge/discharge cycle, and $\alpha$-$PbO_2$ portions 64 which remain substantially unchanged and serve as current carriers.

The relative thicknesses of the two $PbO_2$ portions 64 and 66 are controlled by the amounts of sponge lead 56 and 58 present in the negative electrodes 39 and 40. The upper part of the positive electrode 37 has not undergone electrochemical change, and layers 62 of lead remain.

To prepare the formed cell for operation, the specific gravity of the electrolyte is raised to an operating level (e.g. 1.320 specific gravity) by adding a predetermined quantity of very high specific gravity acid (for example, 1.450 specific gravity acid). Any "formation additives" present are allowed to remain in the battery. Alternatively the formation electrolyte is removed by a vacuum and then an operating electrolyte of the desired specific gravity is introduced.

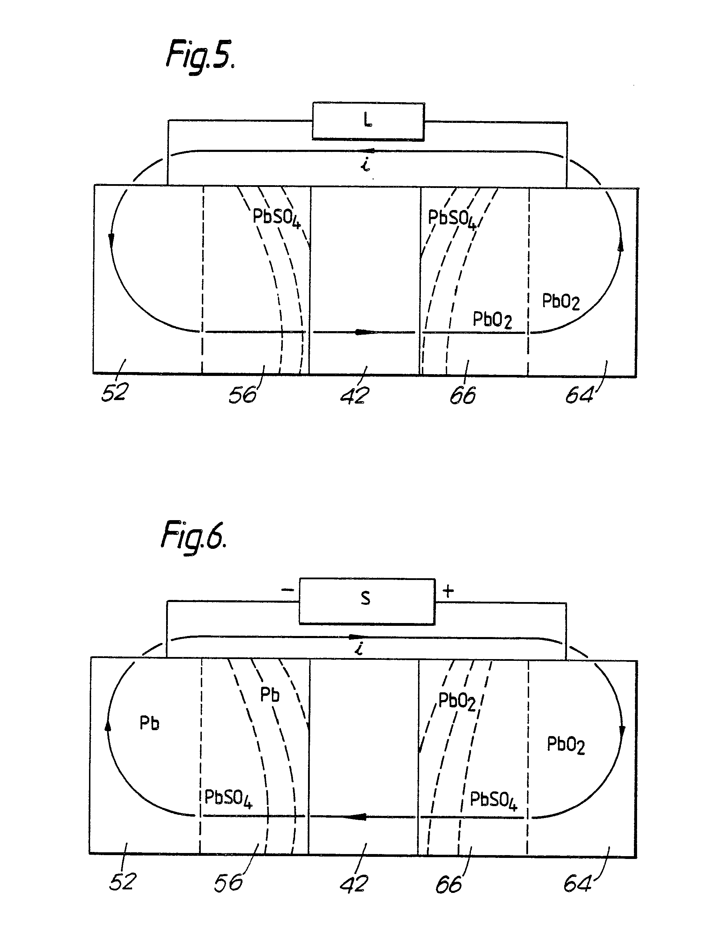

Figure 5 is a diagrammatic representation of component parts of the test cell connected to a load L. As current, indicated by the arrow i, is produced by the battery, the sponge lead 56 of the negative electrode and the $\beta$-$PbO_2$ 66 of the positive electrode are gradually transformed into $PbSO_4$ (as indicated by curved dashed lines) by the "double sulfate" reactions which continues as long as the load L is connected to the battery and until the sponge lead portion 56 of the negative electrode has been completely transformed into $PbSO_4$. The reactions then cease, since the sulfuric acid of the electrolyte does not have access to the interior of the mass of this nonporous lead 52.

Since the positive electrode is of gridless construction and has no specially fabricated, current carrying lead structure such as a typical grid fabricated with a lead frame and various cross members, the $\alpha$-$PbO_2$ portion 64 of this electrode must be of a mass sufficient to carry all of the current required by the load L and generated by the battery. The negative electrode is also of gridless construction although its nonporous lead portion 52, which may be regarded as behaving somewhat similarly to a grid, must also be of a mass sufficient to carry all of the current.

Since the aforementioned reactions are limited by the amount of mass of sponge lead present in the negative electrode, the total amount of $PbO_2$ in the positive electrode must be of a mass such that, the portion of $\alpha$-$PbO_2$ in the positive electrode, which has not undergone electrochemical reaction, is sufficient to carry the required current for the load.

Figure 6 is a diagrammatic representative of the same component parts of the cell starting in a discharged condition and connected to a power supply S for recharging. As the charging current, indicated by the arrow, flows through the battery, the $PbSO_4$ of the positive and negative electrodes gradually becomes electrochemically transformed back into $\beta$-$PbO_2$ and sponge lead, respectively.

In the controlled Planté formation, the positive electrode is subjected to a controlled electrochemical formation of $PbO_2$ from lead in sulfuric acid in which is contained an anion-providing formation additive (e.g. $KClO_4$) which will produce a soluble lead salt. The $PbO_2$ formed is in direct proportion to the formed capacity expressed in ampere-hours.

To make a negative electrode it is first necessary to form such an electrode at least partially into a positive electrode, and then to reform it into a negative electrode. This formation may be made separately, by forming the negative electrode against a dummy, but preferably the positive the negative electrodes of the cell are formed together in situ. The electrode which is ultimately to be a negative electrode is first partially formed into a positive electrode and, when a predetermined portion of the lead of this electrode has been transformed into $PbO_2$, the formation current is reversed and formation continues until all of the $PbO_2$ present in the final negative electrode has been transformed into sponge lead and until at least a corresponding amount of the lead present in the final positive electrode has been transformed into $\beta$-$PbO_2$. It is this selectively controlled formation process which provides the electrodes of the battery construction which is characteristic of the invention.

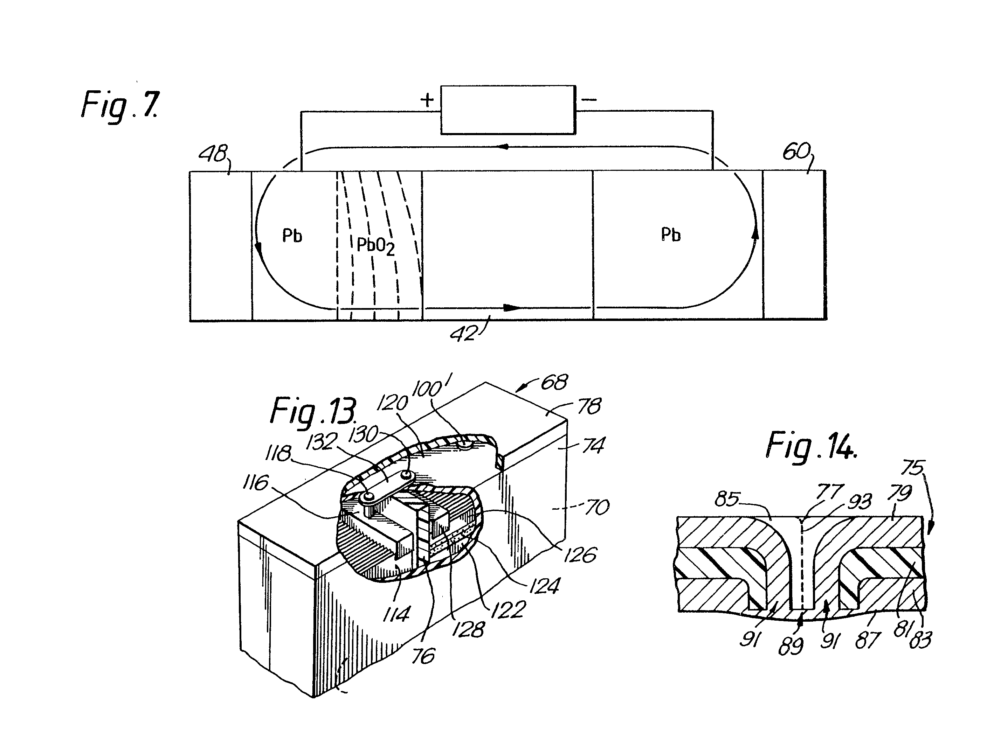

Figure 7 is a diagrammatic representation of a first phase of the Planté formation of the positive electrode. A power supply S is connected to the cell with reversed polarity, that is, the positive terminal of the power supply is connected to the negative terminal of the cell. The current flow is indicated by the arrow i. The lead of the positive electrode is unaltered while the lead of the negative electrode is gradually transformed into $PbO_2$, as indicated by the curved dashed lines. There may be a brief transitory phase, not shown, wherein a portion of the leading edge of the $PbO_2$-lead transition stage becomes $PbSO_4$ but this has no significance in the process. The electrical current is switched off when a predetermined portion of the lead of the negative electrode, which in its ultimate form is sponge lead, has been transformed into $PbO_2$. This cessation of current is an important part of the process, since continued current flow beyond this point would result in transformation to $PbO_2$ of that lead portion which is required to remain as non-porous lead.

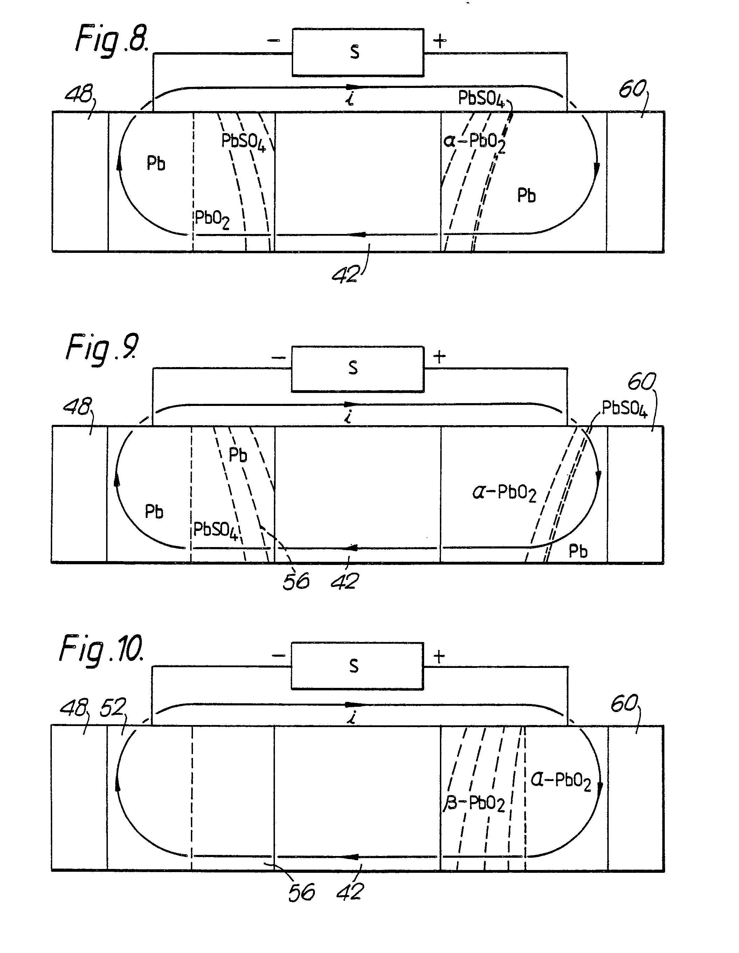

The next phase of the formation process is illustrated in Figure 8. The power supply S is connected to the cell with conventional polarity, that is positive to positive. As current flows, as indicated by the arrow i, the $PbO_2$ of the negative electrode is gradually transformed into $PbSO_4$, as indicated by curved dashed lines at the left hand side of Figure 8. Simultaneously, the metallic lead of the positive electrode is gradually transformed into $PbO_2$. Again there is a brief transitory $PbSO_4$ stage at the leading edge of the $Pb$-$PbO_2$ transition phase (shown in this Figure and in Figure 9). Since the formation electrolyte is sulfuric acid of a relatively low specific gravity, the particular form of $PbO_2$ resulting from this phase of formation is $\alpha$-$PbO_2$, a form which is somewhat less porous than "normal", or $\beta$-$PbO_2$.

After all of the $PbO_2$ of the negative electrode has been transformed into $PbSO_4$, Figure 9, continued electrical current flow will cause this $PbSO_4$ to be gradually transformed into sponge lead as indicated by curved dashed lines 56. The transformation of the lead of the positive electrode into $PbO_2$ will continue during this period.

At this point when the $PbSO_4$ of the negative electrode has become completely transformed into sponge lead, the current flow is terminated, provided that a quantity of $PbO_2$ in the positive electrode at least equivalent to the sponge lead of the negative electrode has been produced. Some metallic lead may remain in the positive electrode. However, since this metallic lead, during normal recharging, will ultimately become $\alpha$-$PbO_2$, this remaining lead must be of a mass such that the $\alpha$-$PbO_2$ formed therefrom is sufficient to carry required current through the positive electrode.

In a preferred formation process the current flow will not be terminated as just suggested, but is allowed to continue until all of the lead of the positive electrode has become transformed into $\alpha$-$PbO_2$.

During normal charge-discharge operation of the battery, when the formation electrolyte has been replaced by operating electrolyte of a relatively high specific gravity, outer portions of the $\alpha$-$PbO_2$ of the positive electrode will be transformed into $\beta$-$PbO_2$ during recharge, Figure 10. The $\beta$-$PbO_2$ is formed by positively charging $PbSO_4$ in the presence of a higher specific gravity acid. Therefore, during normal operation, that portion of the $\alpha$-$PbO_2$ which becomes transformed into $PbSO_4$ during discharge will, upon recharge, be transformed into $\beta$-$PbO_2$. That $\alpha$-$PbO_2$ which has not been discharged will remain $\alpha$-$PbO_2$. The varying depth of the $\beta$-$PbO_2$ portion is indicated by the curved dashed lines in Figure 10.

The parameters of a typical battery cell of the invention are as follows:—

The electrodes are fabricated from a laminated foil material illustrated in Figure 3. The substrate 34, of polyethylene or polypropylene, is 25 μm thick; the outer lead layers 36 and 38 are also 25 μm thick. The total weight of this laminated foil is 6.5 g/100 cm² of area, of which 5.5 g/100 cm² represents lead. The theoretical capacity of an electrode fabricated from such a material is 1.42 ampere-hours/100 cm² at the 10-hour rate. Inherently, however, the utilization of the sponge lead in a negative electrode at this rate will only be 70% and, it is desirable to limit the depth of discharge of the battery to 56% in order to provide a long life. Therefore, the negative electrodes should be formed to some percentage "x" of their theoretical capacity such that:

$$x/(100\%)=(\text{desired \% discharge})/70\%$$

or

$$x=(56\%)(100\%)/70\%=80\%$$

Actual capacity "C' in ampere-hours may then be expressed as

C=(theoretical capacity)(desired % discharge)

or

C=0.8 amp-hrs/100 cm²

After formation to 0.8 ampere-hours/100 cm², the thickness of the negative electrodes is 110μm.

Using this same material as the positive electrode, the theoretical capacity will again be 1.42 amp-hrs/100 cm².

However, since the capacity of the negative electrodes has been limited to 0.8 ampere-hours/100 cm², no more than this amount can ever be taken from the positive electrode. The residual α-PbO₂ of the positive electrode, that is 44%, will be available throughout the entire electrode as current carrying material. After formation, the weight of a positive electrode will be 7.3 g/100 cm², and its thickness is 125 μm.

In this formation step, 80% of the formation electrolyte is utilized at the 10-hour rate. Therefore, 8.8 g or 6.7 cm³ of electrolyte must be absorbed in the separator on each side of the positive electrode. When the separator comprises glass wool of 85% porosity, the separator is 0.4 mm thick, and the total weight of separator means including electrolyte will be 10.2 g/100 cm².

The characteristics of one such cell having a positive electrode 100 cm² in area, and a negative electrode 100 cm² in area, and two separators containing electrolyte are as follows:

| | |
|---|---|
| Weight: | 24 g |
| Thickness: | 1.035 mm |
| Capacity: | 0.8 ampere-hours |
| Volume: | 10.35 cm³ |
| Energy Density: | .155 watt-hours/cm³ |
| =155.0 | watt-hours/litre |
| =0.077 | ampere-hours/cm³ |
| =0.067 | watt-hours/g |
| =67 | watt-hours/kg |

A specific example of a "test cell" 14 of Figures 1 and 2 was constructed. The positive electrode 16 and the negative electrodes 18 and 20 are initially identical in composition, and are 1 cm wide. Their length is chosen such that, when they are combined with a 0.4 mm thick separator 22 those portions of their length which are adjacent to one another are 10 cm long, resulting in an active surface area of 10 cm².

Although there are two negative electrodes 18 and 20 present, their outer lead layers which are closest to the wall portions 24 and 26 (these layers corresponding to those denoted by numerals 52' and 54' in Figure 4) have no access to electrolyte, do not enter into the reactions, and are thus considered irrelevant in this example. The two negative electrodes 18 and 20 thus have the same total capacity as a single negative electrode as described above.

After assembly, the separator 22 was partially saturated with a formation electrolyte comprising H₂SO₄ of specific gravity 1.1, to which (8 g KClO₄)/(liter of H₂So₄) had been added. Since the area of the electrodes is 10 cm² (per side) the expected capacity will be

$$\frac{(0.80 \text{ amp-hrs}) \cdot (10 \text{ cm}^2)}{100 \text{ cm}^2}$$

or 0.08 ampere-hours. The negative electrodes are to be formed to this value which corresponds to 80% formation and 70% utilization of negative active material. The theoretical capacity of the electrodes is 0.142 ampere-hours. Thus an 80% formation requires approximately 0.12 ampere-hours of formation current.

The cell is connected to a power supply in the reversed polarity configuration as illustrated in Figure 7, and was charged with the negative electrodes connected as positive electrodes at 10 milliamperes for 12 hours. Following this, the power supply was connected conventionally as indicated diagrammatically in Figures 8 and 9 and charged at 10 milliamperes for 24 hours such that substantially all of the lead of the positive electrode was transformed into PbO₂. After the electrolyte specific gravity has been adjusted to an operating specific gravity of 1.320, a capacity of 0.081 ampere-hours at the 10-hour rate was realised.

The separator 22, being 0.4 mm thick, is capable of absorbing an amount of operating electrolyte substantially in excess of that required by the electrodes while being no more than 80% saturated with the electrolyte. Therefore, in order to provide a path for oxygen transport from the positive electrodes to the negative electrode during charging, the separator 22 was no more than 80% saturated with the operating electrolyte.

The voltage drop caused by the utilization of PbO₂ as the current carrier in the positive electrode can be calculated. At the one hour rate the cell may be assumed to have a capacity of 0.05 ampere-hours. The residual α-PbO₂ portion (worst case, i.e. end of discharge) has a resistance of 0.4 ohms. The resistive voltage drop at this time will thus be

(0.05 amperes) · (0.4 ohms)=0.02 volts,

which is not considered to be detrimental to operation.

It is commonly assumed that the more porous β-PbO₂ has a lower conductivity than the less porous α-PbO₂. It is known to the battery art, however, that β-PbO₂, when maintained in a relatively confined state, will have a conductivity at least equivalent to that of α-PbO$_2$, thus either form of PbO$_2$ will be operable.

Positive electrodes may be directly produced by deposition or application of PbO$_2$ layers of sufficient thickness directly upon a suitable substrate.

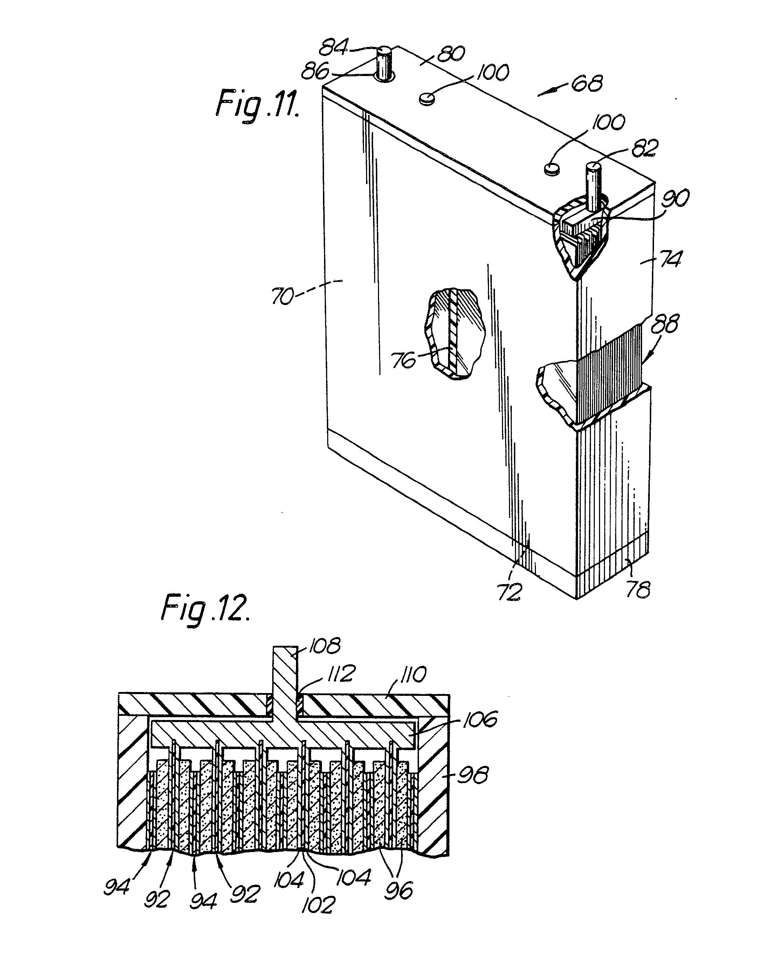

Similar principles may be applied to larger batteries such as mine lamp batteries. A mine lamp battery 68 is illustrated in Figure 11. The battery 68 comprises two cells 70 and 72, in a common jar 74 of a suitable material, for example polycarbonate internally divided by a partition 76 and having a bottom cap 78 and top cell cover 80, which are fixed to the jar 74 by means of solvent cementing, ultrasonic welding, or other means.

Positive negative terminal posts 82 and 84, extend through holes in the top cell cover 80, and are sealed to the cell cover 80 by any conventional means, for instance epoxy resin 86. Each cell has a sealable filling port 100.

Each cell has a plurality of positive and negative foil electrodes 88, separators and electrolyte. The positive electrodes are connected to each other and to the positive post 82 by a lead bridge 90. The negative electrodes are similarly connected together.

Figure 12 illustrates an upper portion of one cell of a similar battery, in which positive electrodes 92, negative electrodes 94 and separators 96 are housed in a jar 98. The positive and negative electrodes 92 and 94 are made from the laminate shown in Figure 3. The positive electrodes each comprise a substrate 102 and two outer layers of metallic lead 104.

The positive electrodes 92 are interconnected by a lead bridge 106 which is case or soft welded to their upper ends. Protruding from the lead bridge 106 is a terminal post 108, which extends through the cell cover 110. Sealing between post 108 and cell cover 110 may be accomplished in a conventional manner, such as by the use of epoxy resin 112.

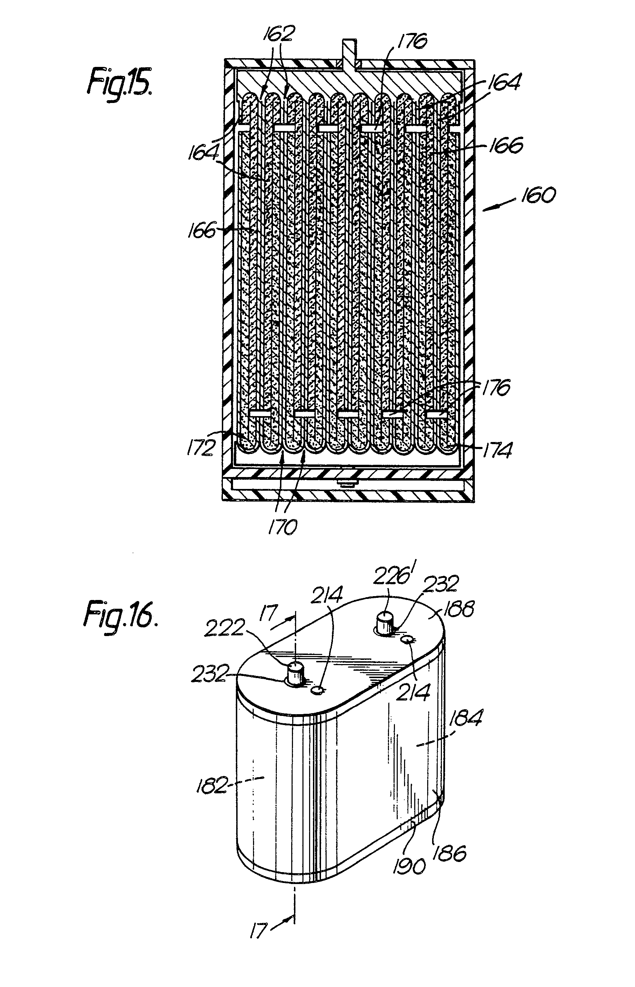

Figure 13 illustrates, in an inverted position, a lower portion of the battery 68 of Figure 11. A plurality of negative electrodes 114 are interconnected by a lead bridge 116 in the same way as the bridge 106. A terminal post 118 extends from the bridge 116 through the bottom wall 120 of the jar 74.

One particular negative electrode 122 is shown, and also part 124 of a separator and a plurality of positive electrodes 126, which may be interconnected to one another by means of a lead bridge 128 having a terminal post 130.

Adjacent cells contain electrode groups which are in an inverted position with respect to one another in order to simplify cell interconnections. Figure 13 shows that the negative terminal post 118 of cell 72 and the positive terminal post 130 of cell 70 lie adjacent to one another, and are connected to one another by means of a lead connecting link 132 which is fused to the terminal posts. Additional cells which are to be electrically connected to one another in series are located adjacent to one another and have their internal electrode groups inverted with respect to one another. Connecting links in this series configuration alternate between upper and lower parts of the battery.

Each cell has a sealable filling port 100′, at its bottom, and the ports 100, 100′ are used for introducing formation electrolyte into the cells, removal of the formation electrolyte after formation has been carried out and for introducing operating electrolyte into the cells. The ports 100, 100′ may be sealed, and designed to function as "blow off" valves to relieve extreme internal gas overpressures.

A typical battery for mine lamp use of Figure 15 has two cells, each containing 34 positive electrodes each with an active surface area of 5.7 cm×16.4 cm=93.48 cm$^2$, 35 negative electrodes having a similar active surface area, and interleaved separators. The total positive surface area is 34×93.48 cm$^2$=3178 cm$^2$. The electrode group has a capacity of 0.8 ampere-hour per 100 cm$^2$ of positive surface area at the 10-hour rate, the expected capacity is:—

$$\frac{3178}{100}=0.8=25.4 \text{ ampere-hours}$$

The total weight of the electrode groups for the two cells, including electrolyte, is approximately 1.6 kilograms.

The above battery is designed to have the same dimensions, and thus the same volume, as a conventional mine lamp battery. This leads to some important comparisons whereby conventional ratio values are taken with reference to an index of 1.0:

|  | Battery of the invention | Conventional battery |
|---|---|---|
| Capacity | 25.4 amp-hrs | 14 amp-hrs |
| Weight (incl. jar) | 1.84 kg | 1.96 kg |
| Power-to-weight ratio | 1.93 | 1.0 |
| Power-to-volume ratio | 1.81 | 1.0 |

Thus, the battery of the invention clearly meets the stated objectives of increasing power-to-weight and power-to-volume ratios.

One important object of this invention is to develop a battery construction which will resist "treeing". This "treeing" phenomenon is one of the primary causes of failure in conventional lead-acid batteries which are deeply cycled, and is due to the fact that the electrolyte in a deeply discharged battery may suffer from an extreme depletion of sulfate ions available for reaction.

As the sulfate ions become depleted due to the well known double-sulfate reactions, the specific gravity of the $H_2SO_4$ electrolyte decreases, approaching the standard 1.0 of water. This, allows the lead of the negative electrode to form soluble lead hydrates, for example $Pb(OH)_2$, rather than $PbSO_4$, which hydrates may then penetrate the foraminous separators. Upon recharge, these hydrates are transformed into lead and, after a sufficient number of charge-discharge cycles, a bridge or "tree" of lead may be formed through the separators thereby producing an internal short-circuit.

Sealed or semi-sealed batteries utilizing a "starved electrolyte" principle, where the depth of discharge is deliberately limited by the amount of available sulfate ions, are extremely susceptible to this phenomenon. Should this principle be applied in a battery of the invention, where the distance between adjacent positive and negative electrodes is so small (e.g. 0.4 millimeters), treeing might severely shorten life.

The potential for treeing may be significantly reduced or eliminated in any conventional battery by: (1) providing an excess of available sulfate ions in the electrolyte, for example, by the addition of a salt such as $MgSO_4$; (2) by limiting the depth of discharge such that there are always sufficient sulfate ions available in the electrolyte; or (3) by a combination of (1) and (2) above. In this manner the formation of soluble lead hydrates may be precluded, and treeing substantially eliminated.

A salt such as $MgSO_4$ may be added to the electrolyte of a battery of the invention. However, the second procedure noted above is an inherent feature of a battery of the invention in that, as previously disclosed, the depth of discharge is limited by the amount of negative lead provided in the negative electrode. The amount of sulfuric acid ($H_2SO_4$) electrolyte absorbed in the separator means is significantly greater than that amount required to discharge the battery to this limit, and thus no soluble lead hydrates can be formed.

The battery of this invention may be sealed lead-acid battery in which there is an "oxygen cycle" of gas recombination. Oxygen evolved at the positive electrodes during charging is recombined with hydrogen at the negative electrodes to form water. Conditions for such recombination include a large surface area of the negative electrodes, and a relatively easy path of travel for the oxygen between the positive and negative electrodes. Some overpressure may be desirable, e.g. an overpressure in the range 0.1 $kg/cm^2$ to 5.0 $kg/cm^2$.

A battery of the invention has a large amount of negative surface area, since the electrodes are so thin. For example the battery of Figure 11 has a negative surface area of 3178 $cm^2$. The distance between positive and negative electrodes is 0.4 mm, filled with foraminous separator only partially saturated with electrolyte, and thus the oxygen will have good access to the negative surfaces. The sealing of ports as 100, 100' permits a desired releasable over-pressure.

A battery of the invention is capable of more rapid discharge and recharge than is possible with conventional batteries. Discharge and recharge rates are highly dependent upon the surface area of the electrodes with respect to the weight of active material in the electrodes. Because foil electrodes used in the invention have an extremely large surface area, discharge and recharge at faster rates is facilitated.

Foil electrodes for a battery of the invention may be provided in various forms. When the lead layers are to be added to the substrate by a rolling process, the plastic substrate may be perforated with holes in which the outer lead layer is rooted. For electrodes which are to be very tightly confined, a substrate may not be necessary. Normally, however, some form of substrate is desirable to facilitate handling during manufacture and, in the case of positive electrodes, the formed $PbO_2$ being quite brittle, to preserve the integrity of the electrode.

Since the substrate may be required to function both as a reinforcement of the lead layers and of the $PbO_2$ layers produced in the positive electrode by electrochemical formation, it is important to provide a good bond between the substrate and the outer lead layers before formation. It has been found that, in a rolled foil, this bond may be enhanced by perforating the substrate prior to application of the lead layers. During the rolling process the opposing lead layers are forced into contact with one another through the perforations in the substrate and become integrated and bonded to one another by the rolling pressure.

Preferably the foils are mechanically modified prior to electrochemical formation is so that the lead layers become rooted in the substrate.

Figure 14 illustrates a portion of such a modified lead foil body 75, which has been pierced by a needle or other implement at its upper side 77 so that both the upper lead layer 79 and the substrate 81 have been deformed downwardly and extend into lower lead layer 83. The hole produced by the needle actually extends right through the foil body at this point in the process. There is an annular (or other configuration) ridge of lead primarily coming from layer 83 formed around the edge of the hole 85 at the lower surface 87. This ridge is wiped over or otherwise flattened out to substantially close the hole, as indicated at arrow 89, thereby to provide an annular zone of intimate contact or bond between layers 79 and 83 as indicated by the arrows 91. When lead is electrochemically formed into $PbO_2$, the $PbO_2$ will expand and seek to occupy a larger volume than the original lead. In the present invention hole 85 remains open at upper surface 77, and thus provides an expansion chamber which may become filled with $PbO_2$ during electrochemical formation of a positive electrode, as indicated by dashed line 93.

Another form of foil electrode including a substrate comprises a laminate in which a plastic substrate has a single layer of lead fixed to one side. Such laminates are arranged in abutting pairs with the plastic sides touching to comprise electrodes. In another form the separator acts as the substrate to one side of which a layer of lead is applied. Any appropriate foraminous separator material e.g. needle-punched polyester, or glass wool, has a somewhat irregular surface and adherence of the lead layer to the substrate is enhanced. This gives a saving in cost, volume and weight, since the non-operative plastic substrate is eliminated. The substrate may comprise fibrous material or mesh.

To simplify construction of batteries using this form of foil electrode, one edge of the lead layer is rolled or folded over the separator. The lead layer is on the outer side of the folded portion. Two such folded electrodes, are combined with their lead layers abutting to produce a compound electrode.

One cell of a rectangular mine lamp battery, using such folded compound electrodes having separators as a substrate, is illustrated in Figure 15.

The cell has a plurality of compound positive electrodes 162. Each pair comprises two folded electrodes having layers of lead 164 affixed to separators 166, with the lead layers 164 abutting. Similar compound negative electrodes 170 are inverted and interleaved between the positive electrodes 162. On opposite sides of the electrode group are outer negative electrodes 172, 174 of single folded construction.

Adjacent laminated foils of opposing polarity are terminated and arranged such that spaces 176 remain between the ends of these electrodes.

The separator substrates 166 of the positive electrodes abut separator substrates of the negative electrodes, thus in effect acting as a separator of double thickness. Separator substrate thickness will, therefore, be selected such that the combination of two such substrates gives a separator of a required thickness.

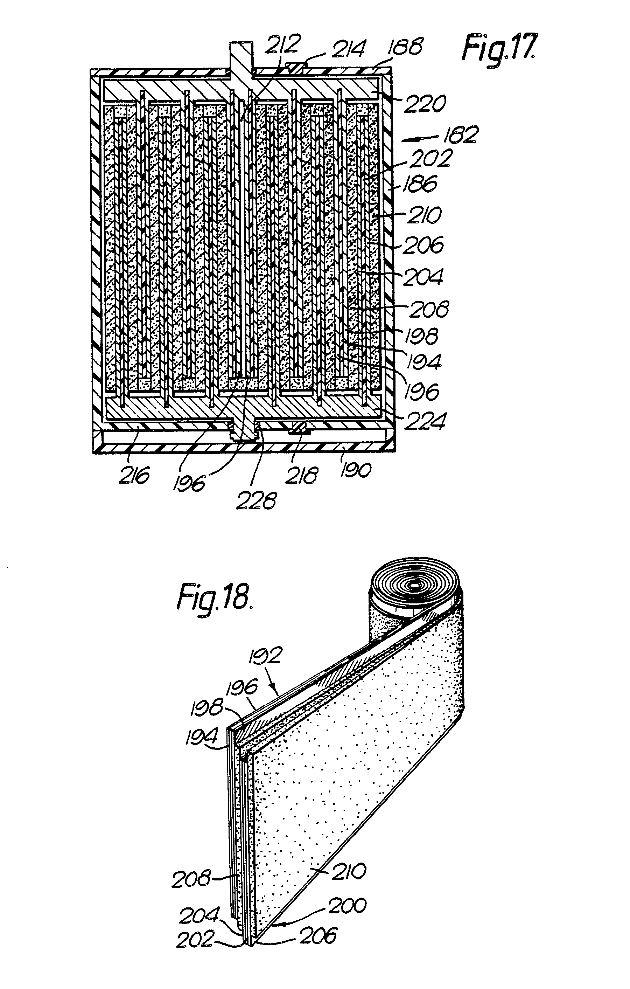

· Figure 16 illustrates a four-volt mine lamp battery, comprising two cylindrical cells 182, 184 constructed according to the invention. Figure 17 is a cross-section through cell 182. In each cell the arrangement of electrodes and separators is of the configuration known to the art as "jelly-roll", and such an arrangement, partially unrolled, is illustrated in Figure 18.

The two cells 182 and 184 are in a common jar 186 having a cell cover 188 including a sealable port 214 which includes one-way pressure release valve means, and a bottom cap 190. The bottom wall 216 of jar 186 is also provided with sealable ports 218, one for each cell. The "jelly-roll" comprises four strips of material combined and rolled as shown. The strip 192, which becomes a positive electrode after formation, comprises a laminated lead foil, having a plastic substrate 194 with layers 196, 198 of lead affixed to sides thereof. The strip 200, which will after formation become a negative electrode comprises a plastic substrate 202 with layers 204, 206 of lead affixed to sides thereof, strips 208, 210 are separators.

At the centre of the roll two layers 196 of lead are adjacent to one another separated only by a space 212, Figure 17, the dimension of which space depends upon the tightness of the roll.

The strips 192, 208, 200, 210 are vertically offset from one another such that the upper edge of strip 192 is the uppermost extremity of roll 180 and the lower edge of strip 200 is the lowermost extremity of the said roll. Separators 208, 210 are arranged such that some portions of these separators are always between adjacent surfaces of the foil strips 192, 200.

A battery of this nature, made with laminated foils and separators previously specified and having a height of 150 mm and a diameter of 50 mm, will have a capacity of 22.5 ampere-hours at the 10-hour rate. Assuming that the capacity at the 1-hour rate will be 15 ampere-hours, the total voltage drop due to the use of the $PbO_2$ as a current collector will be 0.048 volts at the 1-hour rate which is negligible.

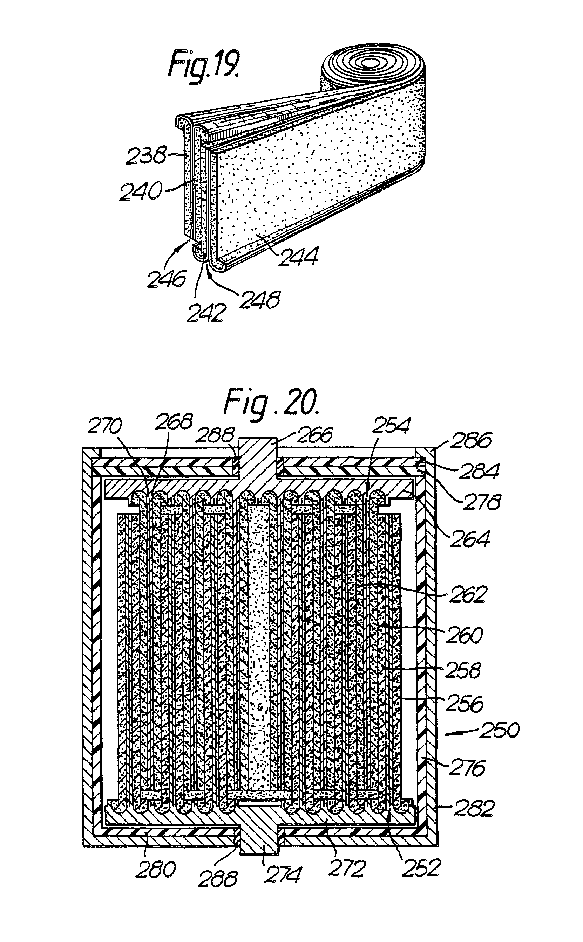

Figure 18 illustrates, partially unrolled, a jelly-roll electrode group, comprising four folded electrode strips similar to the electrodes in Figure 15. The four strips are arranged in pairs, to comprise two compound electrodes 246, 248. A single-cell cylindrical battery of this form is illustrated in Figure 20 and its construction is similar to that shown in Figure 19. One pair of strips 252 corresponding to strip 248 of Figure 19, functions as a negative electrode, and another pair of strips 254 corresponding to strip 246 of Figure 19 functions as a positive electrode. Separator substrates 256, 258, 260 and 262 will be partially saturated with electrolyte, both during formation and operation.

Upper edges of the wrapped positive electrodes 254 are interconnected by a lead bridge 264, which may be a complete disc, and which includes a positive terminal post 266. The bridge 264 may be cast or soft-welded *in situ*. A similar bridge 272, including a negative terminal post 274, is combined with the lower edge of the negative electrode 252 in a similar manner.

The electrode group is confined within a relatively thin inner closure body 276, comprising a cylinder of a plastic material which is chemically inert to $H_2SO_4$ such as polyester or a polyolefin. The cylinder is open at one end and has an inner cover 278 of a similar material affixed to and substantially closing the open end. Inner cover 278 and bottom wall 280 of the inner enclosure body 276 have holes through which the positive terminal post 266 and a negative terminal post 274, respectively, extend. Formation electrolyte may be introduced through openings around these posts. After formation of the electrodes the formation electrolyte is removed and replaced by an operating electrolyte through these same openings.

The formed battery is then enclosed in a relatively strong aluminium or steel outer cylindrical container 282 which is open at one end. The container 282 has a hole at its bottom through which the negative terminal post 274 extends. An upper closure part 284 of a similar material, is pierced to allow the positive post 266 to extend therethrough, and is held in place by clinching over the upper extremity 286 of the outer container 282. After the battery has been electrochemically formed and an operating electrolyte introduced, the openings around terminal posts 266 and 274 are sealed. Such that these posts become bonded to inner covers 278 and upper closure part 284 to inner enclosure body 276 and outer container 282, respectively, using a suitable insulating and sealing compound such as an epoxy resin 288.

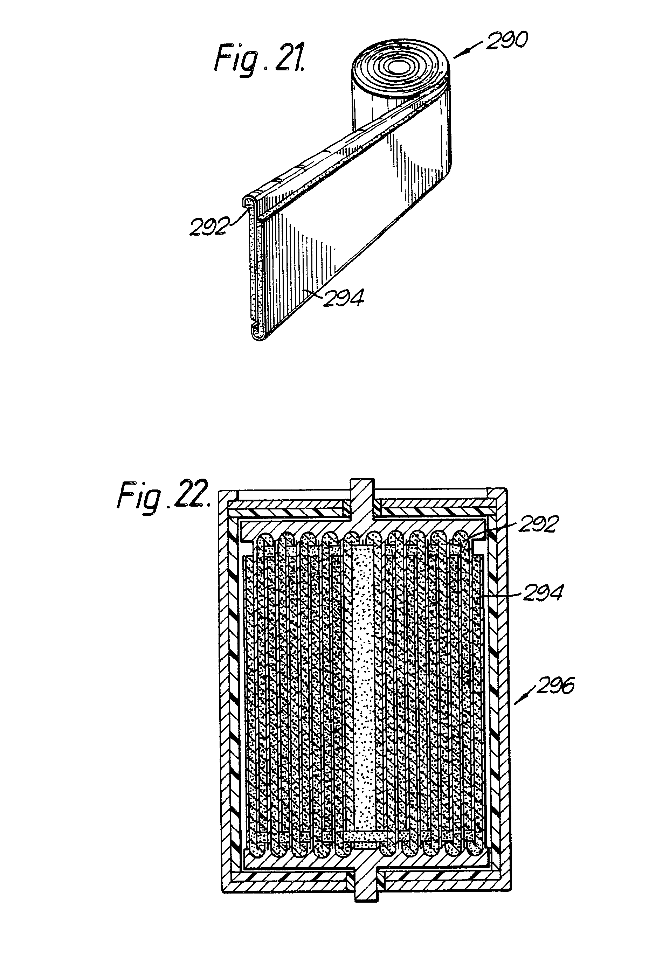

A similar battery may be constructed utilizing an electrode group of the kind illustrated in Figure 21, comprising two strips 292, 294 of folded electrode material. Such a battery is illustrated in the cross-sectional view of Figure 22 in which strip 292 functions as a positive electrode, and a strip 294 functions as a negative electrode.

Batteries similar in nature to the "jelly-roll" cells just described, but having cross-sections of differing configurations, may be produced. On such battery, having an elliptical cross-section, is produced by wrapping interlayered strips of electrode and separator material, about a mandrel then adding appropriate bridges, etc. and placing the said electrode group into an approximately shaped container. The mandrel may be removed or, if it is of a suitable material, allowed to remain in place. Alternatively, a "jelly-roll" having a circular cross-sectional configuration may be reformed into a different shape by the application of external pressure prior to the addition of interconnecting lead bridges.

Foil electrodes for batteries of the invention may be fabricated having various thicknesses of lead layers. An appropriate range for such thicknesses may be between 4 and 300 μm.

Disclosed herewith are two additional numerical examples, specifying lead thicknesses of different dimension, denoted as Examples A and B.

Example A

Positive electrodes are fabricated from a laminated foil having layers of lead, 60 μm thick, affixed to each side of a 20 μm thick plastic substrate. The total thickness of such a foil, prior to formation, will be 0.14 mm. After Planté formation to a depth of 50 μm, the total thickness will be 0.25 mm and the theoretical capacity 2.89 ampere-hours/100 cm². Any lead remaining in the positive electrodes after Planté formation will become totally oxidized to $PbO_2$ after a few charge-discharge cycles. Since the negative electrodes will be utilized to limit the depth of discharge of the positive electrodes, the actual usable capacity of the positive electrodes will be 1.7 ampere-hours/100 cm² and their weight will be 15.9 g of lead/100 cm².

Negative electrodes are fabricated from a laminated foil having layers of 50 μm thick affixed to each side of a 20 μm thick plastic substrate. The thickness of such a foil, prior to formation, will be 0.12 mm. After Planté formation to a depth of 40

μm, the total thickness will be 0.2 mm, and the weight will be 8.8 g of lead/100 cm².

The operating electrolyte employed is $H_2SO_4$ of specific gravity 1.320. In order to obtain a capacity of 1.7 ampere-hours/100 cm² and still limit electrolyte utilization to 80%, the required separator thickness is 0.65 mm; the weight of two such separators, including the operating electrolyte, is 16 g/100 cm².

The total weight of an electrode group comprising one positive electrode, one negative electrode and two separators containing an operating electrolyte is 43 g/100 cm². Energy density (without jar) is 79 watt hours/kg.

The electrodes may be Planté formed using sodium perchlorate or organic acids as forming agents in the formation electrolyte. Organic acids will gradually be oxidised, and sodium perchlorate may be either washed away or left in the battery.

Example B

Positive and negative electrodes are fabricated from laminates comprising layers of lead 4 μm thick affixed to each side of a 13 μm thick plastic substrate. When the lead present in the positive electrode has been formed to $PbO_2$, 50% of such $PbO_2$ is β-$PbO_2$ and the remaining 50% is α-$PbO_2$ which is utilised as current-carrying means. The formed capacity of the electrodes is limited by the negative electrodes 0.06 ampere-hours/100 cm². With separators 50 μm thick, the energy density is 71 watt-hours/kg or 0.17 watt-hours/cm³. In a cell of "jelly-roll" construction the energy density is approximately 65 watt-hours/kg. The capacity at the 10-minute discharge rate is 80% of the capacity at the 3-hour rate, and even higher discharge rates may be possible.

The advantages of this example include a minimal change in capacity with differing discharge rates and a very rapid formation and recharge capability.

The most prevalent of health hazards present in conventional battery construction is the presence of free lead particles or lead oxide which may occur as airborne respirable particles or as ingestable material. The use of foil batteries as electrode material precludes the occurrence of such free lead particles. When formation of the lead of positive electrodes to $PbO_2$ takes place *in situ* within a cell body, no free $PbO_2$ will be present in the manufacturing environment.

Particularly in the case of batteries of the invention employing electrode groups of a "jelly-roll" construction, assembly of the electrode groups can easily be automated to degree that manufacturing personnel will only come into contact with lead during loading and unloading of the automated equipment. In this manner, it will be seen that exposure to lead and/or lead oxides, common to conventional battery manufacture is avoided.

**Claims**

1. A lead-acid battery construction of the kind comprising positive (37) and negative (39, 40) foil electrodes which are separated by a porous separator (42), characterised in that the negative electrode (39, 40) comprises sponge lead (56, 58) in contact with the separator (42) and non-porous lead (52, 54) which acts as current carrier, and the positive electrode (37) comprises β-PbO$_2$ (66) in contact with the separator and α-PbO$_2$ (64) in sufficient amount to carry the required current in any portion of the charge/discharge cycle.

2. A battery as claimed in Claim 1, in which the positive (37) electrode includes a reinforcing substrate (60).

3. A battery as claimed in Claim 2, in which the positive electrode (37) is formed from lead foil layers (62) which are laminated to the substrate (60).

4. A battery as claimed in Claim 2 or Claim 3, in which the substrate (60) is formed with perforations.

5. A battery as claimed in Claim 4, in which some of the component parts of the positive electrode (37) extend through the perforations in the substrate (60).

6. A battery as claimed in Claim 5, in which some of the component parts of the positive electrode (37) are in rooted relationship to the substrate (60).

7. A battery as claimed in any one of Claims 1 to 6, in which the proportion of sponge lead (56, 58) of the negative electrode (39, 40) defines the proportion of residual α-PbO$_2$ (64) of the positive electrode (37) after discharge within limits which enable the sponge lead (56, 58) of the negative electrode (39, 40) and β-PbO$_2$ (66) of the positive electrode (37), in the presence of electrolyte, to generate a required electrical current of a strength which can be carried by the non-porous lead (52, 54) of the negative electrode (39, 40) and residual α-PbO$_2$ (64) of the positive electrode (37).

8. A battery as claimed in Claim 1, which is formed from lead foil layers (62) which are laminated to the separators (42).

**Patentansprüche**

1. Bleiakkumulator mit positiven (37) und negativen (39, 40) Folienelektroden, die durch ein poröses Trennstück (42) voneinander getrennt sind, dadurch gekennzeichnet, daß die negative Elektrode (39, 40) Bleischwamm (56, 58) in Kontakt mit dem Trennstück (42) und als Stromführer dienendem nicht-porösem Blei (52, 54) aufweist und daß die positive Elektrode (37) β-PbO$_2$ (66) in Kontakt mit dem Trennstück und α-PbO$_2$ (64) in einer zum Führen des erforderlichen Stromes in jedem Abschnitt des Ladungs/Entladungs-Zyklus ausreichenden Menge aufweist.

2. Akkumulator nach Anspruch 1, in dem die positive (37) Elektrode eine verstärkende Trägerschicht (60) enthält.

3. Akkumulator nach Anspruch 2, in dem die positive Elektrode (37) aus Bleifolien-Schichten (62) gebildet ist, die auf die Trägerschicht (60) geschichtet sind.

4. Akkumulator nach Anspruch 2 oder 3, in dem die Trägerschicht (60) mit Perforationen versehen ist.

5. Akkumulator nach Anspruch 4, in dem einige Bestandteile der positiven Elektrode (37) sich durch die Perforationen in der Trägerschicht (60) erstrecken.

6. Akkumulator nach Anspruch 5, in dem einige Bestandteile der positiven Elektrode (37) in der Trägerschicht (60) verwurzelt sind.

7. Akkumulator nach einem der Ansprüche 1 bis 6, in dem der Anteil an Bleischwamm (56, 58) der negativen Elektrode (39, 40) den Anteil von restlichem α-PbO$_2$ (64) der positiven Elektrode (37) nach der Entladung innerhalb Grenzen festlegt, die dem Bleischwamm (56, 58) der negativen Elektrode (39, 40) und dem β-PbO$_2$ (66) der positiven Elektrode (37) in Anwesenheit von Elektrolyt ermöglichen, einen erforderlichen elektrischen Strom einer Stärke zu erzeugen, die von dem nicht-porösen Blei (52, 54) der negativen Elektrode (39, 40) und dem restlichen α-PbO$_2$ (64) der positiven Elektrode (37) geführt werden kann.

8. Akkumulator nach Anspruch 1, der aus Bleifolien-Schichten (62) gebildet ist, die auf die Trennstücke (42) geschichtet sind.

**Revendications**

1. Structure de batterie plomb-acide du type comprenant des électrodes à feuilles positive (37) et négative (39, 40) qui sont séparées par un séparateur poreux (42), caractérisée en ce que l'électrode négative (39, 40) comprend du plomb spongieux (56, 58) en contact avec le séparateur (42) et du plomb non poreux (52, 54) qui se comporte comme en porteur de courant, et l'électrode positive (37) comprend du β-PbO$_2$ (66) en contact avec le séparateur et du α-PbO$_2$ (64) en quantité suffisante pour porter le courant demandé en toute portion de cycle charge/décharge.

2. Batterie selon la revendication 1, dans laquelle l'électrode positive (37) comprend un substrat (60) de renfort.

3. Batterie selon la revendication 2, dans laquelle l'électrode positive (37) est formée de couches (62) en feuille de plomb qui sont stratifiées sur le substrat (60).

4. Batterie selon la revendication 2 ou la revendication 3, dans laquelle le substrat (60) présente des perforations.

5. Batterie selon la revendication 4, dans laquelle certaines des pièces constitutives de l'électrode positive (37) passent dans les perforations du substrat (60).

6. Batterie selon la revendication 5, dans laquelle certaines des pièces constitutives de l'électrode positive (37) sont ancrées sur le substrat (60).

7. Batterie selon l'une quelconque des revendications 1 à 6, dans laquelle la proportion de plomb spongieux (56, 58) de l'électrode négative (39, 40) définit la proportion d'α-PbO$_2$ résiduel (64) de l'électrode positive (37) après une décharge dans des limites qui permettent au plomb spongieux (56, 58) de l'électrode négative (39, 40) et au β-PbO$_2$ (66) de l'électrode positive (37), en présence de l'électrolyte, de générer un courant électrique demandé, d'une force qui peut être portée par le plomb non poreux (52, 54) de l'électrode négative (39, 40) et l'α-PbO$_2$ résiduel (64) de l'électrode positive (37).

8. Batterie selon la revendication 1, qui est formée à partir de couches (62) en minces feuilles de plomb qui sont stratifiées sur les séparateurs (42).

0 051 349

Fig.1.

Fig.2.

Fig.3.

1

Fig. 4.

0 051 349

*Fig.5.*

52  56  42  66  64

*Fig.6.*

52  56  42  66  64

Fig.7.

Fig.13.

Fig.14.

Fig.8.

Fig.9.

Fig.10.

0 051 349

Fig.11.

Fig.12.

6

**Fig.15.**

**Fig.16.**

Fig.17.

212  214  188

220

182

202

186

210

206

204

208

198

194

196

224

216  196  218  190

228

Fig.18.

192

196

198

194

208

204

202

210

200

206

# Fig.19.

238
240
246
242
248
244

# Fig .20.

270 268 288 266 254 286
284
278
264
262
260
258
256
250
276
282
280 288 274 272 252

Fig. 21.

290

292

294

Fig. 22.

292

294

296